# FASCICULE DE BREVET EUROPEEN

(11) **EP 1 143 319 B1**
(45) Date de publication et mention de la délivrance du brevet: **08.02.2006**
(21) Numéro de dépôt: 01400683.7
(22) Date de dépôt: 15.03.2001
(51) Int. Cl.: G05D 16/16, F02C 7/22

(54) **Dispositif et procédé de régulation de pression et débit de carburant d'alimentation d'une unité de servovannes**
Verfahren und Vorrichtung zur Druck und Durchflussregelung vom Kraftstoff einer Servoventilanordnung
Device and method of flow and pressure regulation of the fuel actuating a servovalve unit

(30) Priorité: 16.03.2000 FR 0003359
(43) Date de publication de la demande: 10.10.2001
(73) Titulaire: HISPANO SUIZA, 92707 Colombes Cedex (FR)
(72) Inventeur: Blot-Carretero, Marie-Trinité Rose, 77950 Maincy (FR); Maillard, Claude Marcel, 77870 Vulaines S/Seine (FR); Brocard, Jean-Marie, 77950 Rubelles (FR); Galozio, Philippe, 77127 Lieusaint (FR)

(56) Documents cités:
- EP-A- 0 311 746
- US-A- 4 245 470
- US-A- 4 846 210
- US-A- 4 899 535
- US-A- 5 715 674

## Description

### Domaine de l'invention

L'invention se situe dans le domaine des dispositifs hydromécaniques de dosage du débit et de la pression de carburant alimentant une unité de servovannes hydrauliques dont le liquide moteur est constitué par ledit carburant. Elle concerne aussi un circuit de carburant comportant ledit dispositif et un procédé de régulation de la pression et du débit dudit carburant.

### Arrière plan technologique

Sur un moteur d'avion, le carburant est utilisé dans des injecteurs du moteur, à la sortie desquels le carburant est brûlé, fournissant ainsi l'énergie de propulsion et d'alimentation de dispositifs auxiliaires du moteur. Le carburant est également utilisé comme liquide de refroidissement dans des échangeurs thermiques. Enfin, le carburant est utilisé pour actionner un ensemble de servovannes hydrauliques, le liquide de puissance de ces servovannes étant constitué par du carburant. Ainsi, par exemple, des tuyères et d'autres organes à géométrie variable sont actionnés par des vérins hydrauliques dont le liquide de puissance est constitué par du carburant.

Cette alimentation des servovannes se fait en général par une unité centrale d'alimentation des servovannes dont la pression doit rester constante et dont le débit doit pouvoir varier en fonction des besoins desdites servovannes.

Le circuit d'alimentation des injecteurs, des échangeurs et de l'unité centrale d'alimentation des servovannes, comporte une pompe basse pression dite pompe Bp élevant à une pression Pb un carburant à une pression initiale Pca, en provenance de réservoirs de l'avion. Il comporte ensuite une pompe haute pression dite pompe HP élevant le carburant à une pression supérieure à la pression nécessaire aux injecteurs et à la centrale d'alimentation des servovannes.

Les débits non utilisés sont recyclés. Il est bien connu qu'il ne faut pas que la proportion de carburant recyclé par rapport au carburant utilisé soit trop importante, car le passage par la pompe haute pression échauffe le carburant qui devient alors moins propre à sa fonction de liquide de refroidissement. Les pompes haute pression peuvent être des pompes dont le débit est fixé uniquement par leur vitesse de rotation. Cette vitesse est elle-même une fonction de la vitesse de rotation du moteur. Les pompes peuvent aussi être des pompes dont le débit est une fonction de la vitesse de rotation mais aussi d'un autre paramètre que l'on peut contrôler en sorte que pour une même vitesse de rotation, la pompe peut avoir des débits différents les uns des autres.

Comme expliqué par exemple dans le brevet US-A-5 715 674 Reuter, les pompes à débit variable pour une même vitesse d'entraînement en rotation ont, sur les pompes à débits fixés uniquement par la vitesse de rotation, l'avantage de pouvoir délivrer un débit de carburant adapté en principe à chaque instant au débit nécessaire au fonctionnement du moteur.

Il est dit en principe, car comme expliqué dans ce document, le temps de réponse de la pompe n'est pas négligeable. En particulier, les servovannes introduisent des variations de débits erratiques nécessitant une bande passante de la régulation à des fréquences qui ne sont pas compatibles avec les capacités de pilotage de la pompe, que cette pompe soit à géométrie variable ou à plateau. Le temps de réponse trop long peut se traduire par des baisses des débits dirigés vers les injecteurs du moteur et/ou par des dysfonctionnements de servomécanismes actionnés par du carburant sous pression.

Pour remédier à ce défaut, il est prévu dans le brevet Reuter, une valve 208 de contrôle de pompe. Cette valve 208 a une sortie qui est connectée à un organe 112 de commande du débit de la pompe 104.

Le fonctionnement de la valve 208, n'est pas expliqué et en particulier on ne comprend pas comment est obtenue une meilleure réponse de la pompe aux régimes transitoires, comme rapporté en haut de la colonne 7. On comprend cependant que la valve 208 est un organe essentiel d'une boucle de régulation, visant à réduire autant que possible le débit fourni par la pompe 104. Ce débit est en principe maintenu à un niveau légèrement supérieur au niveau nécessaire pour assurer le débit consommé par les injecteurs du moteur et le débit consommé à chaque instant par les servovalves.

Bien qu'un tel dispositif présente une amélioration part rapport à l'art antérieur, il n'assure pas un temps de réponse suffisamment court pour répondre aux besoins des servovalves commandant divers organes du moteur.

### Brève description de l'invention

Les inventeurs de la présente invention ont réalisé que le temps de réponse des pompes à débits variables, est assez court pour qu'une boucle de régulation incorporant une telle pompe puisse réguler sans problèmes majeurs le débit de carburant alimentant les injecteurs du moteur. Ce débit varie selon des lois connues en fonction de la vitesse de rotation du moteur et d'autres paramètres tels que la température et la pression extérieure qu'il est possible de connaître à tout instant. Le moteur ayant une grande inertie, sa vitesse de rotation varie lentement. Il en est de même pour les autres paramètres ayant une influence sur le débit consommé par les injecteurs.

L'idée des inventeurs est donc de découpler la boucle de régulation du débit des injecteurs de la boucle de régulation de la centrale d'alimentation des servovannes.

Pour cela, selon l'invention, le débit demandé à la pompe haute pression est la somme du débit nécessaire à chaque instant aux injecteurs du moteur et du débit maximum nécessaire pour l'alimentation des servovannes.

Le débit maximum d'alimentation des servovannes est le débit qu'il faudrait fournir à la centrale si toutes les servovannes consommaient, à un même instant, le débit maximum que chacune d'entre elles peut consommer. La somme des débits maxima de toutes les servovannes est ainsi, pour un régime moteur, une constante connue en sorte que les variations de débit de la pompe sont uniquement les variations du débit consommé par les injecteurs du moteur. Il est ainsi possible de réguler sans problèmes particuliers le débit dirigé vers les injecteurs.

Lorsque ce débit a été utilisé, il reste un débit suffisant pour répondre à tous les besoins des servovannes quelles que soient les circonstances.

Ainsi, selon l'invention, une boucle de régulation de la pression et du débit de carburant dirigé vers une unité d'alimentation de servovanne située en amont d'une unité d'alimentation d'injecteurs du moteur comporte une arrivée de carburant à une première pression (Pb) et à un débit régulé constant, et un dispositif de régulation destiné à maintenir constante la pression de l'unité d'alimentation quel que soit le débit consommé par cette unité et les variations des différentes pressions de carburant en fonction du régime moteur et des autres paramètres influant sur les pressions.

Dans un mode de réalisation de l'invention, le dispositif de régulation de la pression comporte une enceinte destinée à assurer cette pression constante. Cette enceinte est en communication d'une part, avec l'unité d'alimentation et, d'autre part, par une ouverture de sortie (19) ayant une section variable, avec une partie du circuit carburant débouchant entre la pompe haute pression et la pompe basse pression.

L'ouverture de sortie à section variable varie en fonction de la position de premiers moyens d'obturation de l'ouverture. Les déplacements des premiers moyens d'obturation de l'ouverture pour faire varier la section d'ouverture de sortie se font autour d'une position d'équilibre variable.

La position variable d'équilibre est une fonction d'une différence de pression entre une première pression (Pb) en aval de la pompe basse pression et en amont de la pompe haute pression et une seconde pression (Pca) en amont de la pompe basse pression. Les déplacements des premiers moyens d'obturation autour de cette position d'équilibre variable sont une fonction du débit consommé par l'unité d'alimentation des électrovannes.

La variation de la section d'ouverture autour de la position d'équilibre variable est obtenue comme expliqué plus haut au moyen d'un premier obturateur mobile sous l'action de deux forces antagonistes. L'une de ces forces est constituée par l'action conjuguée de la pression Pca et d'un moyen élastique par exemple un ressort, l'autre force est constituée par l'action de la pression Pb sur ce même obturateur.

La variation de la section d'ouverture autour de la position d'équilibre en fonction du débit consommé par l'unité d'alimentation est obtenue par le déplacement de second moyens d'obturation mobile. Ces seconds moyens sont mobiles sous l'action de deux forces antagonistes. L'une de ces forces est constituée par des forces de pression exercées par le carburant conjuguées à des forces élastiques créées, par exemple, par un ressort. L'autre force est créée par des forces de pression du carburant. L'une de ces autres forces est créée par du carburant à la pression à laquelle se trouve l'alimentation des servovannes. En conséquence, une baisse de cette pression provoque une diminution de cette force et donc un mouvement de fermeture des seconds moyens d'obturation. Dans un but de simplification et d'amélioration de la fiabilité, les deux moyens d'obturation de l'enceinte sont-confondus en un seul, constitué par une partie d'un tiroir mobile masquant plus ou moins l'ouverture de sortie. Le tiroir mobile a deux extrémités et une partie intermédiaire formant piston.

Le piston du tiroir sépare un compartiment étanche en deux demi-chambres, une demi-chambre haute et une demi-chambre basse. L'enceinte à la pression régulée d'alimentation des servovannes est constituée par cette demi-chambre basse. La première demi-chambre est mise en communication avec une partie amont d'un diaphragme et la demi-chambre basse avec la partie aval de ce même diaphragme. La partie amont du diaphragme reçoit du carburant en provenance de la pompe HP, de préférence au travers d'un filtre. Un ressort exerce une pression vers le bas sur le tiroir. Une extrémité haute du tiroir est soumise à la pression Pca et une extrémité basse est soumise à la pression Pb.

Les forces qui s'exercent sur le tiroir et tendant à une diminution de l'ouverture de sortie sont :
- la force de pression Pca exercée sur l'extrémité haute du tiroir,
- la force du ressort,
- la force de pression en amont du diaphragme (Psf), exercée sur le piston du tiroir.

Les forces antagonistes qui s'exercent sur le tiroir et tendant à une augmentation de l'ouverture de sortie sont :
- la force de pression Pb exercée sur l'extrémité basse du tiroir,
- la force de pression en aval du diaphragme exercée sur le piston du tiroir.

Les paramètres sur lesquels on a par conception une action directe et qui doivent être pris en considération pour obtenir une pression régulée constante en fonction du débit des servovannes sont :
- les sections des extrémités haute et basse du tiroir,
- la section du diaphragme,
- le coefficient élastique du ressort,
- la surface du piston du tiroir.

En résumé, l'invention est relative à un dispositif de régulation de la pression et du débit de carburant dirigé vers une unité de puissance d'un ensemble de servovannes d'un moteur d'avion, le carburant en provenance d'un réservoir de l'avion à une pression Pca passant par une pompe basse pression élevant sa pression à une pression Pb puis par une pompe haute pression et notamment par un filtre en sortie duquel le carburant est à une pression Psf, dispositif de régulation caractérisé en ce qu'il comporte :
- un compartiment ayant trois chambres étanches l'une à l'autre, une chambre haute, une chambre intermédiaire et une chambre basse,
- un tiroir mobile dans le compartiment, le tiroir ayant une extrémité haute engagée de façon étanche dans la chambre haute, une partie intermédiaire comportant un piston séparant de façon étanche la chambre intermédiaire en deux demi-chambres, la chambre haute étant mise en pression par du carburant à la pression Pca, la chambre basse étant mise en pression par du carburant à la pression Pb,
- un moyen élastique logé dans la demi-chambre haute exerçant sur le tiroir une force vers le bas,
- un diaphragme ayant une entrée et une sortie, l'entrée étant connectée d'une part à une arrivée de carburant à la pression Psf et, d'autre part, avec la demi-chambre haute, la sortie étant connectée d'une part, à une alimentation des servovannes et, d'autre part, à une ouverture d'entrée de la demi-chambre basse, le déplacement du piston dans le compartiment obturant de façon variable une section d'une première ouverture de la chambre intermédiaire en communication avec un organe à la pression Pb.

De préférence, les sections des extrémités haute et basse du tiroir sont égales. De la sorte, la force tendant à une augmentation de l'ouverture est proportionnelle au différentiel de pression Pb-Pca. Ce différentiel de pression est lui-même proportionnel au carré de la vitesse de rotation du moteur. Le débit passant au travers du diaphragme est lui-même proportionnel à la pression en amont du diaphragme.

De la sorte, le débit passant au travers du dispositif de régulation et composé de la somme du débit dirigé vers les servovannes et du débit de retour, en sortie de l'ouverture variable de la demi-chambre basse, est proportionnel à la vitesse de rotation du moteur au moins sur une certaine plage. Cette caractéristique est bien adaptée au débit nécessaire aux servovannes dont les besoins sont croissants avec la vitesse de rotation des moteurs.

Selon la revendication 8, l'invention est également relative à un procédé de régulation de la pression et du débit de carburant dirigé vers une unité de puissance d'un ensemble de servovannes d'un moteur d'avion.

### Brève description des dessins

Une description détaillée de l'invention sera maintenant effectuée en regard des dessins annexés dans lesquels :

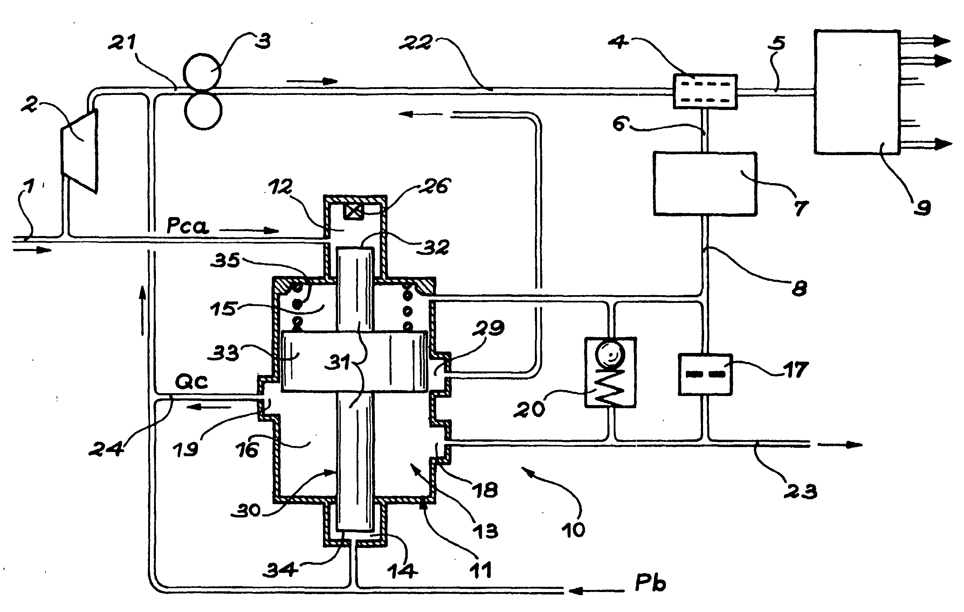

- la figure 1 est un schéma illustrant une réalisation de l'invention.

### Description d'un mode de réalisation de l'invention

La figure 1 représente de façon très schématique un contrôleur de débit d'asservissement selon l'invention et son implantation dans un circuit de carburant.

Il est tout d'abord précisé que le circuit de carburant a été simplifié à l'extrême de façon à ne faire apparaître que les raccordements du contrôleur de débit, en omettant des éléments intermédiaires tels que par exemple, des filtres , des échangeurs thermiques, des courts-circuits (by pass) qui, de façon connue, sont utilisés dans des circuits de carburant.

Le carburant arrive du réservoir de l'avion par une tuyauterie 1 à une pression Pca. Il est mis en pression par une pompe basse pression de gavage 2 dont il sort à une pression Pb.

Le carburant sortant de cette pompe BP2, et du carburant d'une pompe d'une boucle de retour dont il sera parlé plus loin, sont introduits par une tuyauterie 21 dans une pompe haute pression (HP) 3, dont le débit pour chaque vitesse d'entraînement est réglable.

Selon l'invention le débit de réglage de la pompe HP 3 est égal à la somme du débit nécessaire pour alimenter les injecteurs du moteur et du débit maximum que peuvent consommer les dispositifs hydromécaniques dont le liquide hydraulique moteur est constitué par du carburant sous pression. De cette façon, les variations de débit qui doivent être assurées par la pompe HP, ne sont que les variations de débit du moteur. Ces variations sont assez lentes pour pouvoir être régulées sans problèmes particuliers. En particulier, elles sont compatibles avec le temps de réponse de la pompe.

Le carburant est ensuite, par une tuyauterie 22, mené de préférence vers un filtre autonettoyant 4. De façon connue, le filtre autonettoyant 4 a une sortie 5 pour du carburant non filtré et une sortie 6 pour du carburant filtré.

Le carburant non filtré est dirigé vers une unité 9 de dosage du carburant dirigé vers les injecteurs des moteurs. Le carburant présent sur la sortie filtrée 6 est dirigé vers un réchauffeur 7 avant d'être utilisé par des servovalves actionnant des mécanismes des moteurs.

Le dispositif 10 selon l'invention, a pour fonction de maintenir constante une pression d'alimentation de ces servovalves, quel que soit le débit absorbé par ces mécanismes.

Ainsi, le dispositif 10 reçoit par un conduit 8, un débit de carburant à peu près égal au débit maximum que peuvent absorber les servovalves. Le carburant en sortie du dispositif 10 de contrôle de débit d'asservissement est dirigé pour partie par une tuyauterie 23 vers les servovannes, et pour une partie non utilisée, est recyclé par une tuyauterie 24 vers la tuyauterie 21 alimentant la pompe HP 3 comme signalé plus haut.

Le dispositif de contrôle de débit d'asservissement comporte essentiellement un compartiment 11 comportant trois chambres étanches l'une à l'autre. Une chambre haute 12, une chambre intermédiaire 13 et une chambre basse 14. Il est précisé que les expressions "haute" et "basse" ne sont employées que pour distinguer les chambres entre elles. Dans le matériel lui-même ces chambres pourront avoir des positions l'une par rapport à l'autre qui soient différentes quant à leurs niveaux respectifs. Un tiroir 30 est mobile dans le compartiment 11.

Dans un mode simple de réalisation ce tiroir comporte une tige 31, comportant un épaulement 33 formant piston pour la chambre intermédiaire 13. Une extrémité haute 32 de la tige 31 pénètre de façon étanche dans la chambre haute 12. Une extrémité basse 34 de la tige 31 pénètre de façon étanche dans la chambre basse 14. La chambre intermédiaire 13 est partagée par le piston 33 en deux demi-chambres ; une demi-chambre intermédiaire haute 15, et une demi-chambre intermédiaire basse 16.

Le carburant filtré en provenance du réchauffeur 7 et se trouvant à une pression Psf est mis en communication avec la demi-chambre haute 15, d'une part et avec une entrée d'un diaphragme 17. La sortie du diaphragme 17 est en communication d'une part, avec le conduit 23 d'alimentation des servovalves et, d'autre part, avec la demi-chambre basse 16, au travers d'une ouverture 18 de cette demi-chambre 16.

Le carburant non utilisé par les servovannes et recyclé par l'intermédiaire des tuyauteries 24-21 quitte la demi-chambre basse par une ouverture de section variable 19.

Le piston 33 lorsqu'il se déplace masque plus ou moins l'ouverture de sortie 19.

Un ressort 35 logé dans la demi-chambre haute 15 est en appui sur le piston 33 et exerce sur ce dernier une force tendant à pousser le piston vers la demi-chambre basse.

Le fonctionnement est le suivant :
on observera tout d'abord que la position du piston 33 dans la chambre intermédiaire 13 est une fonction de la force exercée par le ressort 35, de la pression Pca exercée par le carburant sur l'extrémité haute 32 du tiroir 30 et de la pression Pb exercée par le carburant sur l'extrémité basse 34 du tiroir 30. On notera également que la différence de pression Pb - Pca est proportionnelle au carré du nombre de tour moteur, puisque les pompes BP 2 et HP 3 tournent à des vitesses proportionnelles au nombre de tour par minute N du moteur.

On notera également que le diaphragme 17 maintient une différence de pression constante entre son entrée et sa sortie, et que la position du tiroir 30 est également commandée par cette différence de pression. Le piston 33 reçoit en effet sur sa face haute la pression Psf et sur sa face basse la pression en sortie du diaphragme 17.

A l'équilibre, la pression dans la chambre basse est égale à la pression nécessaire pour l'alimentation des servovannes, cela signifie que le débit de carburant arrivant au travers du diaphragme 17, et le débit Qc de carburant s'échappant par l'ouverture 19 de la chambre intermédiaire 13, sont tels que cette pression est assurée.

Supposons toutes choses restant égales par ailleurs, en particulier, la vitesse de rotation du moteur et donc les pressions Pb, Psf, qu'un besoin d'une servovanne provoque un appel de carburant.

La pression dans la demi-chambre 16 chute. La pression Psf présente dans la demi-chambre 15, et le ressort 35 poussent sur le piston 33, ce qui a pour effet de réduire la surface de l'ouverture 19, et donc le débit à travers cette ouverture et ceci jusqu'à ce qu'un nouvel équilibre soit atteint. En cas de réduction de la pression, le phénomène inverse (déplacement du piston vers le haut) conduit à une remontée du piston et à une augmentation du débit au travers de l'ouverture 19.

Ainsi on voit qu'à partir d'une position d'équilibre variable en fonction des pressions fournies par les pompes, le tiroir va se déplacer pour maintenir constante la pression disponible pour les servovannes, et ceci quel que soit le débit consommé par ces dernières.

De préférence, certains organes de sécurité permettent de pallier certains défauts qui pourraient survenir, de façon à garantir un fonctionnement éventuellement dégradé. Un clapet de surpression 20 est placé en parallèle au diaphragme 17. Ce clapet s'ouvrirait en cas de colmatage ou givrage du diaphragme 17, limitant ainsi la perte de charge au travers de ce diaphragme.

Une butée mécanique 26 limite la course du tiroir 30 vers le haut, c'est-à-dire dans le sens d'une plus grande section de l'ouverture réglable 19. Cette butée limiterait la valeur du débit autorisé de retour, en sortie de la demi-chambre basse, si la différence de pression Psf - Pb tombait en dessous d'une valeur minimale. Cette butée de sécurité garantirait alors une marge de débit dirigé vers les injecteurs du moteur entre des vitesses de rotation allant du ralenti au plein gaz, sans aller jusqu'à garantir cette marge pour le cas du rallumage en vol.

De préférence, cette butée se présente sous la forme d'une vis introduite dans un taraudage parallèle à la direction de déplacement du tiroir 30. De cette façon, la butée peut être réglée.

Dans un mode de réalisation permettant en outre une meilleure régulation du refroidissement des paliers de pompe la demi-chambre basse est dotée d'une seconde ouverture de sortie 29 destinée à alimenter partiellement l'échangeur de refroidissement des paliers de pompe. Cette ouverture est placée de telle sorte, qu'aux faibles régimes moteurs, cette ouverture soit fermée, c'est-à-dire complètement obturée par le piston 33. Il revient au même de dire que cette ouverture est totalement obturée par le piston 33 lorsque l'ouverture 19 présente une section d'ouverture faible.

Lorsque le régime moteur augmente la pression Pb augmente, et la position d'équilibre du piston 33 se déplace vers le haut, libérant ainsi un débit complémentaire pour le refroidissement des paliers de pompe. La suppression de débit de refroidissement à bas régime permet d'optimiser plus facilement le refroidissement des paliers de pompes dans les régimes élevés.

## Revendications

1. Dispositif (10) de régulation de la pression et du débit de carburant dirigé vers une unité de puissance (23) d'un ensemble de servovannes d'un moteur d'avion, le carburant en provenance d'un réservoir de l'avion à une pression Pca passant par une pompe basse pression (2) élevant sa pression à une pression Pb puis par une pompe haute pression (3) et notamment par un filtre (4) en sortie duquel le carburant est à une pression Psf, le dispositif de régulation comportant:
- un compartiment (11) ayant trois chambres (12,13,14) étanches l'une à l'aube, une chambre haute (12), une chambre intermédiaire (13) et une chambre basse (14),
- un tiroir (30) mobile dans le compartiment (11), le tiroir ayant une extrémité haute (32) engagée de façon étanche dans la chambre haute (12), une partie intermédiaire comportant un piston (33) séparant de façon étanche la chambré intermédiaire en deux demi-chambres (15,16), la chambre haute (12) étant mise en pression par du carburant à la pression Pca, la chambre basse (14) étant mise en pression par du carburant à la pression Pb,
- un moyen élastique (35) logé dans la demi-chambre haute (15) exerçant sur le tiroir (30) une force vers le bas,
- un diaphragme (17) ayant une entrée et une sortie, l'entrée étant connectée d'une part à une arrivée (8) de carburant à la pression Psf et, d'autre part, avec la demi-chambre haute (15), la sortie étant connectée d'une part, à une alimentation (23) des servovannes et, d'autre part, à une ouverture d'entrée (18) de la demi-chambre basse, le déplacement du piston (33) dans le compartiment (11) obturant de façon variable une section d'une première ouverture (19) de la demi-chambre basse (16) en communication avec un organe (24) à la pression Pb.

2. Dispositif selon la revendication 1, **caractérisé en ce qu'**il comporte en outre un clapet (20) de surpression connecté en parallèle au diaphragme (17).

3. Dispositif selon la revendication 1 ou 2, **caractérisé en ce qu'**il comporte en outre une butée (26) limitant la course du piston (33) et donc la section maximum de l'ouverture (19) de sortie de carburant.

4. Dispositif selon la revendication 3, **caractérisé en ce que** la butée (26) est réglable.

5. Dispositif selon l'une quelconque des revendications 1 à 4, **caractérisé en ce qu'**il comporte une seconde ouverture de sortie (29), cette seconde ouverture (29) étant obturable de façon variable par le piston (33), cette seconde ouverture étant totalement obturée lorsque la première ouverture de sortie (19) présente une section faible.

6. Dispositif selon l'une quelconque des revendications 1 à 5, **caractérisé en ce que** la pompe haute pression débite pour chaque régime moteur un débit qui est la somme :
- du débit nécessaire, à ce régime et dans les conditions du vol, à des injecteurs du moteur de l'avion,
- du débit qui serait nécessaire à ce régime moteur pour l'ensemble de servovannes, si chacune des servovannes utilisait, simultanément aux autres servovannes, le débit maximum utilisable à ce régime moteur par cette servovanne.

7. Dispositif selon l'une quelconque des revendications 1 à 6, **caractérisé en ce que** le piston (33) est mobile sous l'action de deux groupes de forces antagonistes :
- un premier groupe de forces agissant dans le sens de la fermeture et comportant:
- une force élastique,
- une force proportionnelle à la pression Pca,
- une force proportionnelle à la pression Psf,
- un second groupe de forces agissant dans le sens de l'ouverture et comportant:
- une force proportionnelle à la pression Pb,
- une force proportionnelle à la pression dans la demi-chambre basse (16) inférieure à la pression Psf avec un écart sensiblement constant par rapport à la pression Psf.

8. Procédé de régulation de la pression et du débit de carburant dirigé vers une unité de puissance d'un ensemble de servovannes d'un moteur d'avion, le carburant en provenance d'un réservoir de l'avion à une pression Pca passant par une pompe (2) basse pression élevant sa pression à une pression Pb, puis par une pompe (3) haute pression réglable, en aval de laquelle le carburant est à une pression Psf, procédé de régulation comportant les étapes suivantes :
- on régule le débit de la pompe haute pression pour lui faire débiter pour chaque régime moteur un débit qui est la somme :
- du débit nécessaire, à ce régime et dans les conditions du vol, à des injecteurs du moteur de l'avion,
- du débit qui serait nécessaire à ce régime moteur pour l'ensemble de servovannes, si chacune des servovannes utilisait, simultanément aux autres servovannes, le débit maximum utilisable à ce régime moteur par cette servovanne,
- en amont d'une unité d'alimentation des injecteurs du moteur, on met en communication une unité d'alimentation des servovannes avec un compartiment (11) par l'intermédiaire d'une ouverture (18) et on obture plus ou moins une ouverture de sortie (19), les ouvertures (18) et (19) étant situées dans une même partie du compartiment (11), l'ouverture (19) étant en communication avec un organe à la pression Pb et ayant une section variable en fonction de la position d'un piston (33) mobile dans le compartiment (11), le piston (33) étant mobile sous l'action de deux groupes de forces antagonistes :
- un premier groupe de forces agissant dans le sens de la fermeture et comportant :
- une force élastique,
- une force proportionnelle à la pression Pca,
- une force proportionnelle à la pression Psf,
- un second groupe de forces agissant dans le sens de l'ouverture et comportant :
- une force proportionnelle à la pression Pb,
- une force proportionnelle à la pression dans la partie du compartiment comportant les deux ouvertures (18) et (19) inférieure à la pression Psf avec un écart sensiblement constant par rapport à la pression Psf.

## Claims

1. Device (10) for regulating the pressure and flow rate of fuel directed to a power unit (23) of a collection of servovalves of an aircraft engine, the fuel originating from a fuel tank of the aircraft at a pressure Pca passing through a low-pressure pump (2) which raises its pressure to a pressure Pb then through a high-pressure pump (3) and in particular through a filter (4) on the outer side of which the fuel is at a pressure Psf, the regulating device comprising:
- a compartment (11) having three chambers (12, 13, 14) sealed with respect to one another, a top chamber (12), an intermediate chamber (13) and a bottom chamber (14),
- a slide (30) that can move in the compartment (11), the slide having a top end (32) engaged in a sealed fashion in the top chamber (12), an intermediate part comprising a piston (33) dividing the intermediate chamber in a sealed fashion into two half-chambers (15, 16), the top chamber (12) being pressurized by fuel at the pressure Pca, the bottom chamber (14) being pressurized with fuel at the pressure Pb,
- an elastic means (35) housed in the top half-chamber (15) and exerting a downwards force on the slide (30),
- a diaphragm (17) having an inlet and an outlet, the inlet being connected on the one hand to an intake (8) for fuel at the pressure Psf, and, on the other hand, to the top half-chamber (15), the outlet being connected, on the one hand, to a feed (23) to the servovalves and, on the other hand, to an inlet opening (18) of the bottom half-chamber, the displacement of the piston (33) in the compartment (11) variably closing off a cross section of a first opening (19) of the bottom half-chamber (16) in communication with a component (24) at the pressure Pb.

2. Device according to Claim 1, **characterized in that** it further comprises an overpressure check valve (20) connected in parallel with the diaphragm (17).

3. Device according to Claim 1 or 2, **characterized in that** it further comprises an end stop (26) limiting the stroke of the piston (33) and therefore the maximum cross section of the fuel outlet opening (19).

4. Device according to Claim 3, **characterized in that** the end stop (26) is adjustable.

5. Device according to any one of Claims 1 to 4, **characterized in that** it comprises a second outlet opening (29), it being possible for this second opening (29) to be closed off in a variable fashion by the piston (33), this second opening being completely closed off when the first outlet opening (19) has a small cross section.

6. Device according to any one of Claims 1 to 5, **characterized in that** the high-pressure pump delivers, for each engine speed, a flow rate which is the sum:
- of the flow rate needed, at this speed and under the current flight conditions, by the injectors of the aircraft engine,
- of the flow rate that would be needed at this engine speed for all the servovalves if each of the servovalves was, at the same time as the other servovalves, using the maximum flow rate that could be used by that servovalve at that engine speed.

7. Device according to any one of Claims 1 to 6, **characterized in that** the piston (33) can move under the action of two antagonistic groups of forces:
- a first group of forces acting in the direction of closure and comprising:
- an elastic force,
- a force proportional to the pressure Pca,
- a force proportional to the pressure Psf,
- a second group of forces acting in the direction of opening and comprising:
- a force proportional to the pressure Pb,
- a force proportional to the pressure in the bottom half-chamber (16) lower than the pressure Psf with a more or less constant difference with respect to the pressure Psf.

8. Method for regulating the pressure and flow rate of fuel directed to a power unit of a collection of servovalves of an aircraft engine, the fuel originating from a fuel tank of the aircraft at a pressure Pca passing through a low-pressure pump (2) which raises its pressure to a pressure Pb, then through an adjustable high-pressure pump (3) downstream of which the fuel is at a pressure Psf, the regulating method comprising the following steps:
- the delivery of the high-pressure pump is regulated to cause it to deliver, for each engine speed, a flow rate which is the sum:
- of the flow rate needed, at this speed and under the current flight conditions, by the injectors of the aircraft engine,
- of the flow rate that would be needed at this engine speed for all the servovalves if each of the servovalves was, at the same time as the other servovalves, using the maximum flow rate that could be used by that servovalve at that engine speed,
- upstream of a unit for supplying the injectors of the engine, a servovalve feed unit is placed in communication with a compartment (11) by way of an opening (18) and an outlet opening (19) is closed off to a greater or lesser extent, the openings (18) and (19) being situated in one and the same part of the compartment (11), the opening (19) being in communication with a component at the pressure Pb and having a cross section that can vary according to the position of a piston (33) able to move in the compartment (11), the piston (33) being able to move under the action of two antagonistic groups of forces:
- a first group of forces acting in the direction of closure and comprising:
- an elastic force,
- a force proportional to the pressure Pca,
- a force proportional to the pressure Psf,
- a second group of forces acting in the direction of opening and comprising:
- a force proportional to the pressure Pb,
- a force proportional to the pressure in the part of the compartment comprising the two openings (18) and (19) lower than the pressure Psf with a more or less constant difference with respect to the pressure Psf.

## Patentansprüche

1. Vorrichtung (10) zur Regelung des Drucks und der Durchflussmenge des Kraftstoffs, der einer Steuereinheit (23) einer Servoventileanordnung eines Flugzeugtriebwerks zugeführt wird, wobei der mit einem Druck Pca aus einem Kraftstofftank des Flugzeugs kommende Kraftstoff durch eine Niederdruckpumpe (2) strömt, die seinen Druck auf einen Druck Pb anhebt, und dann durch eine Hochdruckpumpe (3) und insbesondere durch einen Filter (4) strömt, an dessen Ausgang der Kraftstoff einen Druck Psf aufweist, wobei die Regelungsvorrichtung aufweist:
- einen Behälter (11) mit drei Kammern (12, 13, 14), die dicht gegeneinander sind, und zwar eine obere Kammer (12), eine mittlere Kammer (13) und eine untere Kammer (14),
- einen bewegbaren Schieber (30) in dem Behälter (11), wobei der Schieber ein oberes Ende (32) aufweist, das sich unter Dichtigkeit in Eingriff in der oberen Kammer (12) befindet, wobei ein Mittelteil einen Kolben (33) enthält, der auf dichte Weise die mittlere Kammer in zwei Halbkammern (15, 16) unterteilt, wobei die obere Kammer (12) durch Kraftstoff mit dem Druck Pca unter Druck versetzt wird, wobei die untere Kammer (14) durch Kraftstoff mit dem Druck Pb unter Druck versetzt wird,
- ein Federmittel (35), das in der oberen Halbkammer (15) sitzt und auf den Schieber (30) eine nach unten gerichtete Kraft ausübt,
- eine Scheidewand (17) mit einem Einlass und einem Auslass, wobei der Einlass einerseits mit einer Zuführung (8) für Kraftstoff mit einem Druck Psf und andererseits mit der oberen Halbkammer (15) verbunden ist, wobei der Auslass einerseits mit einer Versorgung (23) der Servoventile und andererseits mit einer Einlassöffnung (18) der unteren Halbkammer verbunden ist, wobei das Verschieben des Kolbens (33) in dem Behälter (11) variabel einen Querschnitt einer ersten Öffnung (19) der unteren Halbkammer (16) verschließt, die mit einem Organ (24) mit dem Druck Pb in Verbindung steht.

2. Vorrichtung nach Anspruch 1,
**dadurch gekennzeichnet,**
**dass** sie ferner ein Überdruckventil (20) aufweist, das parallel zu der Scheidewand (17) geschaltet ist.

3. Vorrichtung nach Anspruch 1 oder 2,
**dadurch gekennzeichnet,**
**dass** sie ferner einen Anschlag (26) aufweist, der den Hub des Kolbens (33) und damit den Maximalquerschnitt der Kraftstoffauslassöffnung (19) begrenzt.

4. Vorrichtung nach Anspruch 3,
**dadurch gekennzeichnet,**
**dass** der Anschlag (26) regelbar ist.

5. Vorrichtung nach einem der Ansprüche 1 bis 4,
**dadurch gekennzeichnet,**
**dass** sie eine zweite Auslassöffnung (29) aufweist, wobei diese zweite Öffnung (29) durch den Kolben (33) variabel verschließbar ist, wobei diese zweite Öffnung vollständig verschlossen ist, wenn die erste Auslassöffnung (19) einen geringen Querschnitt aufweist.

6. Vorrichtung nach einem der Ansprüche 1 bis 5,
**dadurch gekennzeichnet,**
**dass** die Hochdruckpumpe bei jeder Motordrehzahl eine Durchflussmenge ausstößt, die die Summe
- der bei dieser Drehzahl und unter den Flugbedingungen für die Einspritzdüsen des Flugzeugtriebwerks erforderlichen Menge,
- der Menge, die bei dieser Motordrehzahl für die Gesamtanordnung der Servoventile erforderlich wäre, wenn jedes Servoventil gleichzeitig mit den anderen Servoventilen die maximale bei dieser Motordrehzahl von diesem Servoventil verwendbare Durchflussmenge verbrauchen würde, darstellt.

7. Vorrichtung nach einem der Ansprüche 1 bis 6,
**dadurch gekennzeichnet,**
**dass** der Kolben (33) unter der Einwirkung von zwei entgegenwirkenden Gruppen von Kräften bewegt werden kann:
- einer ersten Gruppe von Kräften, die in der Schließrichtung wirken und umfassen:
- eine Federkraft,
- eine Kraft, die proportional zu dem Druck Pca ist,
- eine Kraft, die proportional zu dem Druck Psf ist,
- einer zweiten Gruppe von Kräften, die in der Öffnungsrichtung wirken und umfassen:
- eine Kraft, die proportional zu dem Druck Pb ist,
- eine Kraft, die proportional zu dem Druck in der unteren Halbkammer (16) ist, der geringer ist als der Druck Psf und eine im Wesentlichen gleichbleibende Differenz zu dem Druck Psf wahrt.

8. Verfahren zur Regelung des Drucks und der Durchflussmenge des Kraftstoffs, der einer Steuereinheit (23) einer Servoventileanordnung eines Flugzeugtriebwerks zugeführt wird, wobei der mit einem Druck Pca aus einem Kraftstofftank des Flugzeugs kommende Kraftstoff durch eine Niederdruckpumpe (2) strömt, die seinen Druck auf einen Druck Pb anhebt, und dann durch eine regelbare Hochdruckpumpe (3) strömt, hinter der der Kraftstoff einen Druck Psf aufweist, wobei das Regelungsverfahren die folgenden Schritte aufweist:
- die Durchflussmenge der Hochdruckpumpe wird geregelt, damit diese bei jeder Motordrehzahl eine Durchflussmenge ausstößt, die die Summe
- der bei dieser Drehzahl und unter den Flugbedingungen für die Einspritzdüsen des Flugzeugtriebwerks erforderlichen Menge,
- der Menge, die bei dieser Motordrehzahl für die Gesamtanordnung der Servoventile erforderlich wäre, wenn jedes Servoventil gleichzeitig mit den anderen Servoventilen die maximale bei dieser Motordrehzahl von diesem Servoventil verwendbare Durchflussmenge verbrauchen würde, darstellt,
- vor einer Versorgungseinheit der Einspritzdüsen des Triebwerks wird eine Versorgungseinheit der der Servoventile mit einem Behälter (11) über eine Öffnung (18) in Verbindung gesetzt, und eine Auslassöffnung (19) wird mehr oder weniger verschlossen, wobei die Öffnungen (18) und (19) sich in dem gleichen Teil des Behälters (11) befinden, wobei die Öffnung (19) in Verbindung mit einem Organ unter dem Druck Pb steht und einen variablen Querschnitt in Abhängigkeit von der Stellung eines bewegbaren Kolbens (33) in dem Behälter (11) aufweist, wobei der Kolben (33) unter der Einwirkung von zwei entgegenwirkenden Gruppen von Kräften bewegt werden kann:
- einer ersten Gruppe von Kräften, die in der Schließrichtung wirken und umfassen:
- eine Federkraft,
- eine Kraft, die proportional zu dem Druck Pca ist,
- eine Kraft, die proportional zu dem Druck Psf ist,
- einer zweiten Gruppe von Kräften, die in der Öffnungsrichtung wirken und umfassen:
- eine Kraft, die proportional zu dem Druck Pb ist,
- eine Kraft, die proportional zu dem Druck in dem Teil des Behälters mit den beiden Öffnungen (18) und (19) ist, der geringer ist als der Druck Psf und eine im Wesentlichen gleichbleibende Differenz zu dem Druck Psf wahrt.
